# EUROPÄISCHE PATENTSCHRIFT

(11) **EP 3 795 436 B1**
(45) Veröffentlichungstag und Bekanntmachung des Hinweises auf die Patenterteilung: **01.03.2023**
(21) Anmeldenummer: 20195032.6
(22) Anmeldetag: 08.09.2020
(51) Int. Cl.: B60T 8/32, B62L 3/00

(54) **DRUCKMODULATOR FÜR EIN ANTIBLOCKIER-SYSTEM EINES FAHRRADS**
PRESSURE MODULATOR FOR AN ANTI-LOCK BRAKING SYSTEM OF A BICYCLE
MODULATEUR DE PRESSION POUR UN SYSTÈME ANTIBLOCAGE D'UN VÉLO

(30) Priorität: 19.09.2019 DE 202019105187 U
(43) Veröffentlichungstag der Anmeldung: 24.03.2021
(73) Patentinhaber: Robert Bosch GmbH, 70442 Stuttgart (DE)
(72) Erfinder: Moia, Alessandro, 71088 Holzgerlingen (DE)

(56) Entgegenhaltungen:
- DE-A1-102012 222 058
- TW-B- I 649 232

## Beschreibung

### Stand der Technik

Die vorliegende Erfindung betrifft einen Druckmodulator für ein Antiblockier-System eines Fahrrads sowie ein Antiblockier-System mit einem derartigen Druckmodulator und ein elektrisch betreibbares Zweirad, insbesondere Fahrrad, beispielsweise ein Pedelec oder S-Pedelec, mit einem derartigen Antiblockier-System.

In der TWI649232 B ist ein Antiblockiersystemvorrichtung beschrieben.

In jüngster Zeit werden nicht nur bei elektrisch betreibbaren Fahrrädern, sondern auch bei normalen Fahrrädern stärkere Bremsen mit Bremsscheiben verwendet. Hierbei besteht die Gefahr, dass ein Nutzer eines derartigen Fahrrads oder elektrisch betreibbaren Fahrrads eine zu starke Bremsung durchführt, bei der insbesondere ein Vorderrad blockieren kann und dies zu einem Überschlag oder Sturz oder dergleichen führen kann. Abhilfe für derartige gefährliche Fahrsituationen können durch Antiblockier-Systeme erreicht werden. Da bei Fahrrädern und elektrisch betreibbaren Fahrrädern ein Kaufgrund u. a. ein Gewicht des Fahrrads ist, müssen derartige Antiblockier-Systeme möglichst ein geringes Gewicht aufweisen. Auch ist eine reduzierte Bauteileanzahl von Vorteil, um ein optisch ansprechendes Fahrrad bereitzustellen. Aus der EP 33 666 536 A1 ist beispielsweise ein Druckmodulator für ein Antiblockier-System bekannt, welcher einen integrierten Bremskraftverstärker aufweist. Hierdurch kann zwar eine notwendige Bremskraft durch den Fahrer reduziert werden, allerdings ergibt sich ein sehr komplizierter Aufbau des Druckmodulators. Ferner ist hier der Aufbau derart gewählt, dass eine Feder vorgesehen ist, gegen die ein Aktor arbeiten muss, um Bremsflüssigkeit aus dem Bremssattel zu fördern. Dabei ist die Anordnung derart, dass ein Fahrer einen Bremsdruck im Bremssattel nicht über die Vorspannung der Feder erhöhen kann. Falls eine Fehlfunktion der Feder vorliegt, führt dies dazu, dass die normale Bremse nicht mehr funktioniert und ein Fahrer das Fahrrad nicht mehr bremsen kann.

### Offenbarung der Erfindung

Der erfindungsgemäße Druckmodulator eines Antiblockier-Systems eines Fahrrads oder elektrisch betreibbaren Fahrrads mit den Merkmalen des Anspruchs 1 hat demgegenüber den Vorteil, dass in jeder Betriebssituation eine sichere Bremsung durch den Fahrer möglich ist. Dabei weist der erfindungsgemäße Druckmodulator einen sehr einfachen und kompakten Aufbau auf. Dies führt zu einem reduzierten Gewicht und einem platzsparenden Aufbau, sodass auch ein optischer Eindruck des Fahrrads nicht nachteilig durch den Druckmodulator beeinträchtigt wird. Dies wird erfindungsgemäß dadurch erreicht, dass der Druckmodulator einen Zylinder und einen zweiseitig beaufschlagbaren Kolben mit einer Durchgangsöffnung im Kolben aufweist. Ferner ist eine Ventilanordnung mit einem Schließelement und einer Betätigungseinrichtung für das Schließelement vorgesehen. Das Schließelement ist dabei in der Durchgangsöffnung im Kolben angeordnet und die Betätigungseinrichtung ist an einem Boden des Zylinders angeordnet und eingerichtet zur Betätigung des Schließelements. Ferner ist ein Aktor zur Bewegung des Kolbens vorgesehen, sodass eine Antiblockier-Regelung über den Aktor ermöglicht wird. Der im Zylinder angeordnete Kolben unterteilt den Zylinder in eine erste, insbesondere obere, und eine zweite, insbesondere untere, Speicherkammer, wobei die erste und zweite Speicherkammer über die Durchgangsöffnung miteinander verbindbar sind. Somit ist die Ventilanordnung in den Kolben und den Zylinder integriert, sodass ein sehr kleiner Bauraum für den Druckmodulator möglich ist.

Die Unteransprüche zeigen bevorzugte Weiterbildungen der Erfindung.

Vorzugsweise weist die Durchgangsöffnung einen ersten, zur oberen Speicherkammer gerichteten Dichtsitz und einen zweiten, zur unteren Speicherkammer gerichteten Dichtsitz auf. Hierdurch wird ein besonders einfacher Aufbau des Druckmodulators erreicht.

Weiter bevorzugt ist das Schließelement lose beweglich in der Durchgangsöffnung angeordnet. Das Schließelement ist dabei vorzugsweise eine Kugel.

Um einen besonders einfachen kostengünstigen Aufbau des Druckmodulators bereitzustellen, ist die Ventilanordnung federlos ausgebildet. D. h. die Ventilanordnung ist nicht, wie im Stand der Technik üblich, als federbelastetes Rückschlagventil vorgesehen, sondern kommt ohne Feder aus. Dies ist möglich, da die Ventilanordnung mit Schließelement und Betätigungseinrichtung aufgeteilt ist und in den Kolben und den Zylinder integriert sind.

Gemäß einer alternativen bevorzugten Ausgestaltung der Erfindung umfasst der Druckmodulator ein Rückstellelement zwischen dem Kolben und dem Zylinder. Das Rückstellelement stellt dabei den Kolben in eine Ausgangslage zurück, in welcher die Ventilanordnung geöffnet ist. Die Ausgangslage ist hierbei ein Zustand, in welcher ein Nutzer des Fahrrads nicht bremst. Eine Federkraft des Rückstellelements kann dabei sehr klein sein.

Die Betätigungseinrichtung am Zylinder ist vorzugsweise ein Stift am Boden des Zylinders. Der Stift ist vorzugsweise über Arme an einem Anschluss einer Leitung angeordnet, welche den Zylinder mit der Bremse am Rad des Fahrrads verbindet.

Um einen besonders kostengünstigen Aufbau zu ermöglichen, ist der Aktor vorzugsweise ein Magnetaktor. Der Magnetaktor ist vorzugsweise in einen Mantel des Zylinders integriert und kann so sehr platzsparend angeordnet werden. Alternativ ist der Aktor ein mit dem Kolben verbundener elektrischer Motor.

Zur Abdichtung zwischen den beiden Speicherkammern im Zylinder ist am Kolben vorzugsweise ein Dichtring vorgesehen.

Weiter bevorzugt umfasst der Druckmodulator eine Druckbegrenzungseinrichtung, die vorzugsweise an einer Leitung des Druckmodulators angeordnet ist.

Gemäß einer weiteren bevorzugten Ausgestaltung der Erfindung ist der Kolben an einer zur ersten Speicherkammer gerichteten Seite kegelförmig ausgebildet. Dadurch kann eine effektive Kolbenfläche, welche zur ersten Speicherkammer gerichtet ist, optimal ausgelegt werden. Die effektive Kolbenfläche bestimmt dabei die hydraulische Kraft, die durch den Kolben erzeugt werden kann.

Ferner betrifft die vorliegende Erfindung ein Antiblockier-System eines Zweirads, insbesondere eines Fahrrads oder eines elektrisch betreibbaren Fahrrads, mit einem erfindungsgemäßen Druckmodulator. Es sei angemerkt, dass unter einem elektrisch betreibbaren Fahrrad ein Fahrrad verstanden wird, welches mittels Muskelkraft und/oder elektrisch betreibbar ist, insbesondere ein Pedelec oder ein S-Pedelec.

Weiterhin betrifft die vorliegende Erfindung ein Zweirad, insbesondere ein Fahrrad oder ein elektrisch betreibbares Fahrrad mit einem Antiblockier-System mit einem erfindungsgemäßen Druckmodulator. Das Zweirad weist vorzugsweise ein Antiblockier-System an einem Vorderrad und/oder einem Hinterrad auf.

### Kurze Beschreibung der Zeichnungen

Nachfolgend werden bevorzugte Ausführungsbeispiele der Erfindung unter Bezugnahme auf die begleitende Zeichnung im Detail beschrieben. In der Zeichnung ist:
- Figur 1: eine schematische Ansicht eines elektrisch betreibbaren Fahrrads mit einem Antiblockier-System und einem Druckmodulator gemäß einem ersten Ausführungsbeispiel der vorliegenden Erfindung,
- Figur 2: eine schematische Darstellung des Druckmodulators von Figur 1 bei einem normalen Bremsvorgang,
- Figur 3: eine schematische Darstellung des Druckmodulators von Figur 2 bei einem ABS-Regeleingriff,
- Figur 4: eine schematische Schnittansicht eines Druckmodulators gemäß einem zweiten Ausführungsbeispiel der Erfindung, und
- Figuren 5 bis 7: alternative Ausgestaltungen von erfindungsgemäßen Druckmodulatoren, insbesondere mit unterschiedlichen geometrischen Kolbenformen.

### Bevorzugte Ausführungsformen der Erfindung

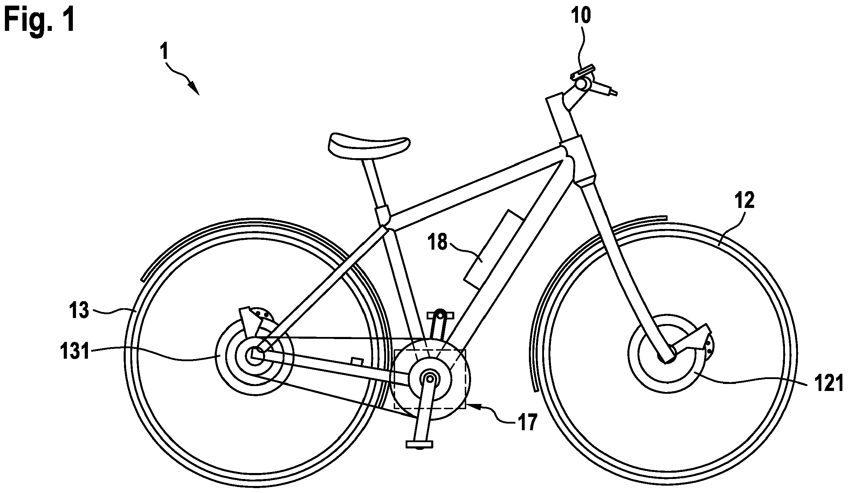

Nachfolgend wird unter Bezugnahme auf die Figuren 1 bis 3 ein elektrisch betreibbares Fahrrad 1 mit einem Druckmodulator gemäß einem ersten Ausführungsbeispiel der Erfindung im Detail beschrieben.

Das elektrisch betreibbare Fahrrad 1 ist in Figur dargestellt und weist ein Vorderrad 12 mit einer Vorderradbremse 121 und ein Hinterrad 13 mit einer Hinterradbremse 131 auf.

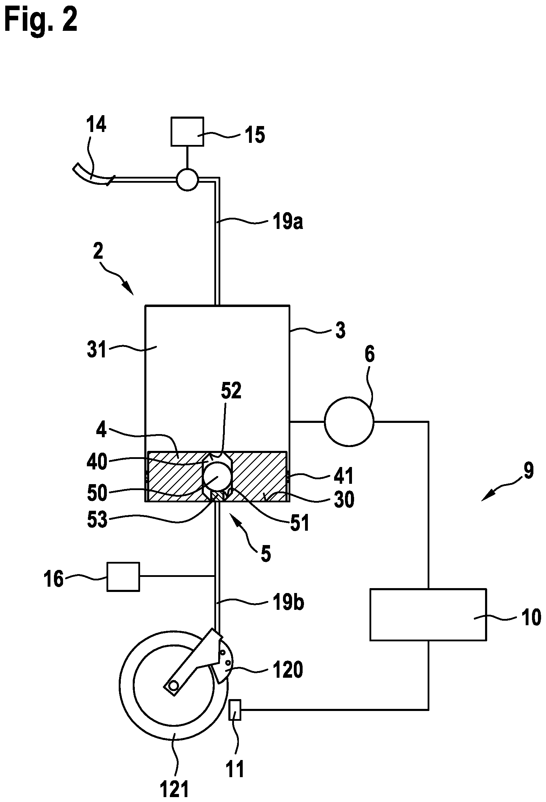

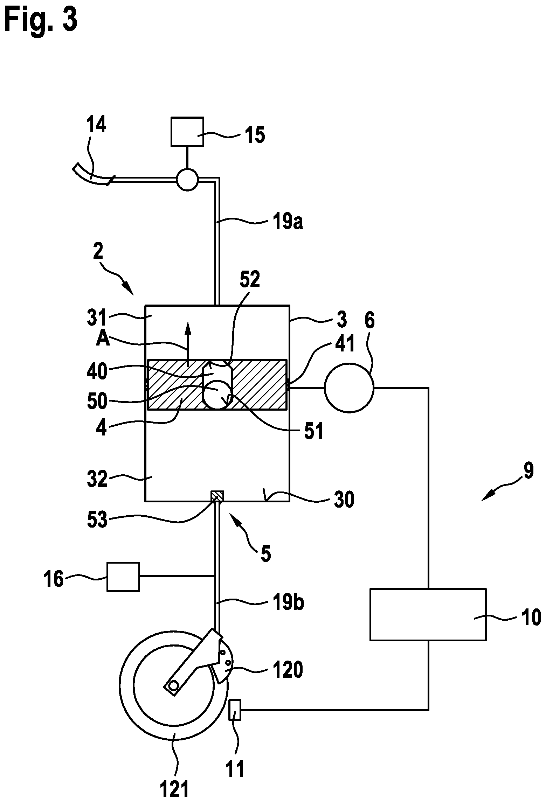

Bei beiden Bremsen ist in diesem Ausführungsbeispiel ein Antiblockier-System 9 integriert, welches im Detail in den Figuren 2 und 3 gezeigt ist. Das elektrisch betreibbare Fahrrad 1 weist ferner einen elektrischen Antrieb 17 auf, welcher in diesem Ausführungsbeispiel als Mittelmotor vorgesehen ist, sowie einen Akku 18, welcher den elektrischen Antrieb 17 mit elektrischer Energie versorgt.

Aus den Figuren 2 und 3 ist schematisch ein Druckmodulator 2 gezeigt, welcher beispielhaft für die Vorderradbremse 121 beschrieben wird. Der Druckmodulator kann jedoch auch in gleicher Weise für die Hinterradbremse ausgebildet sein.

Wie aus Figur 2 ersichtlich ist, umfasst der Druckmodulator 2 einen Zylinder 3 und einen im Zylinder 3 beweglich angeordneten, zylindrischen Kolben 4. Der Kolben 4 weist eine Durchgangsöffnung 40 auf, durch welche ein Fluid hindurchführbar ist. Am äußeren Umfang des Kolbens 4 ist eine Dichtung 41 vorgesehen. Dadurch wird der Zylinder in eine erste bzw. obere Speicherkammer 31 und eine zweite bzw. untere Speicherkammer 32 unterteilt.

Ferner umfasst Druckmodulator eine Ventilanordnung 5. Die Ventilanordnung 5 umfasst ein Schließelement 50, in diesem Ausführungsbeispiel eine Kugel, sowie eine Betätigungseinrichtung 53. Die Betätigungseinrichtung 53 ist dabei an einem Boden 30 des Zylinders 3 angeordnet. Die Betätigungseinrichtung 53 ist dabei ein Stift. Somit ist die Ventilanordnung teilweise in den Kolben und teilweise in den Zylinder integriert.

In der Durchgangsöffnung 40 ist ferner ein erster Dichtsitz 51 und ein zweiter Dichtsitz 52 vorgesehen. Das Schließelement 50 kann dabei entweder am ersten Dichtsitz 51 oder am zweiten Dichtsitz 52 abdichten oder es ist in einer Zwischenlage, bei der das Schließelement 50 an keinem der beiden Dichtsitze 51, 52 die Durchgangsöffnung 40 verschließt und Fluid durch die Durchgangsöffnung 40 strömen kann.

Diese Zwischenposition ist insbesondere in der in Figur 2 gezeigten Position erreicht, in welcher das Schließelement 50 mit der Betätigungseinrichtung 53 in Kontakt ist, sodass sowohl der erste als auch der zweite Dichtsitz 51, 52 offen sind.

Der Druckmodulator 2 umfasst ferner einen Aktor 6, welcher in diesem Ausführungsbeispiel ein Magnetaktor ist. Der Magnetaktor ist dabei in der Lage, den Kolben 40 innerhalb des Zylinders 3 hin und her zu bewegen.

Eine erste Hydraulikleitung 19a führt von einem Bremshebel 14 am Fahrrad zum Zylinder 3. Eine zweite Hydraulikleitung 19b führt dann vom Zylinder 3 zu einem Bremssattel 120 an der Vorderradbremse 121.

Das Bezugszeichen 15 bezeichnet ein Reservoir für eine Hydraulikflüssigkeit, welche im Druckmodulator des Antiblockier-Systems verwendet wird.

Weiterhin ist eine Steuereinheit 10 vorgesehen, welche mit dem Aktor 6 verbunden ist. Wie weiter in Figur 2 gezeigt, ist die Steuereinheit 10 auch mit einem Sensor 11 an der Vorderradbremse 121 verbunden. Der Sensor 11 erfasst beispielsweise ein Blockieren eines Rades des Fahrrads, um so eine ABS-Steuerung in Gang zu setzen. Der Sensor 11 ist beispielsweise ein Drehzahlsensor. Dabei muss der Sensor 11 nicht zwingend an der Vorderradbremse 121 angeordnet sein, sondern kann beispielsweise auch an einem beliebigen Punkt am Vorderrad positioniert sein.

Wie weiter aus Figur 2 ersichtlich ist, ist an der zweiten Hydraulikleitung 19b ein Druckbegrenzer 16 vorgesehen. Der Druckbegrenzer 16 dient dabei zur Begrenzung eines maximalen Drucks, welcher zur Vorderradbremse 121 zugeführt wird.

Figur 2 zeigt den normalen Bremszustand des Fahrrads, bei dem ein Fahrer an einem Bremshebel 14 gezogen hat, sodass ein Druck in der ersten Hydraulikleitung 19a und in der ersten Speicherkammer 31 des Zylinders 3 ansteigt. Der Kolben wird dann in die in Figur 2 gezeigte Endposition am Boden 30 des Zylinders gedrückt. Hierbei ist das Schließelement 50 durch die stiftartige Betätigungseinrichtung 53 vom ersten Dichtsitz 51 abgehoben, sodass Hydraulikfluid durch die Durchgangsöffnung 40 und an den offenen Dichtsitzen 51, 52 vorbei in die zweite Hydraulikleitung 19b und von dort zur Vorderradbremse 121 gelangen kann. Dadurch wird eine normale Bremsung ausgeführt.

Falls nun der Bremsdruck zu groß wird und das Vorderrad blockiert, setzt die ABS-Regelung mittels der Steuereinheit 10 ein. Das Blockieren des Rades wird der Steuereinheit 10 vom Sensor 11 übermittelt. Die Steuereinheit 10 aktiviert dann den Aktor 6, welcher den Kolben 4 in Richtung zur ersten Hydraulikleitung 19a bewegt (Pfeil A). Diese Position ist in Figur 3 gezeigt. Dadurch wird die zweite Speicherkammer 32 vergrößert und die Durchgangsöffnung am ersten Dichtsitz 51 verschlossen, sodass ein Druck an der Vorderradbremse 121 abgebaut wird. Dadurch wird das Blockieren des Rades gelöst und insbesondere ein Überschlag verhindert. Wie in Figur 3 gezeigt, schließt durch die Bewegung des Kolbens 4 im Zylinder 3 das Schließelement 50 am ersten Dichtsitz 51.

Diese Bewegung durch den Zylinder 3 kann durch einfaches Bestromen des Aktors 6, welcher als Magnetaktor ausgebildet ist, erfolgen. Sobald das Blockieren des Rades aufgehoben ist, wird die Bestromung des Aktors 6 unterbrochen, sodass der Bremsdruck, falls der Fahrer immer noch den Bremshebel 14 zieht, wieder zurück zur ersten Speicherkammer 31 geführt. Dadurch bewegt sich der Kolben 3 wieder in Richtung des Bodens 30, bis der Kolben 4 am Boden 30 aufliegt und die zweite Speicherkammer 32 wieder vollständig verschwunden ist. In dieser in Figur 2 gezeigten Position wird das Schließelement 50 vom ersten Dichtsitz 51 wieder durch die Betätigungseinrichtung 53 abgehoben.

Somit kann ein Druckmodulator 2 für ein Antiblockier-System 9 bereitgestellt werden, welcher federlos ausgebildet ist. Dabei ist der Druckmodulator 2 sehr einfach und kostengünstig aufgebaut. Ferner ist nur ein minimaler Bauraum für die Bauteile des Druckmodulators und des Antiblockier-Systems 9 notwendig.

Somit kann erfindungsgemäß eine Antiblockier-Funktionalität nur durch Steuerung eines Aktors 6 realisiert werden. Eine Feder oder eine andere kritische Baukomponente im Druckmodulator ist in diesem Ausführungsbeispiel nicht notwendig. Somit existiert keine Feder oder dergleichen, welche eine Funktionalität der Basisbremse des Fahrrads infrage stellt. Ferner ist auch keine bauteilseitige Begrenzung eines maximalen Drucks vorhanden, welcher ein Fahrer am Bremssattel 120 aufbauen kann. Eine Druckbegrenzung wird ausschließlich durch den Druckbegrenzer 16 bestimmt.

Der Druckbegrenzer 16 kann dabei sicherstellen, dass die Bremse auch problemlos funktioniert, wenn ein Fahrer über den Bremshebel 14 sehr hohe Kräfte aufbringt.

Da in der ersten Speicherkammer 31 der Kolben 4 von der Hydraulikflüssigkeit umgeben ist, bestimmt eine effektive Kolbenfläche eine hydraulische Kraft, die durch den Kolben erzeugt werden kann. Dies hat insbesondere bei Verwendung eines Magnetaktors den Vorteil, dass eine geometrische Form der zur ersten Speicherkammer 31 gerichteten Seite des Kolbens 4 frei wählbar ist, um beispielsweise magnetische Kräfte zu optimieren. Hierdurch kann eine besonders schnelle Freigabe der Bremse nach einem Blockieren durch Ansteuerung des Aktors 6 ermöglicht werden.

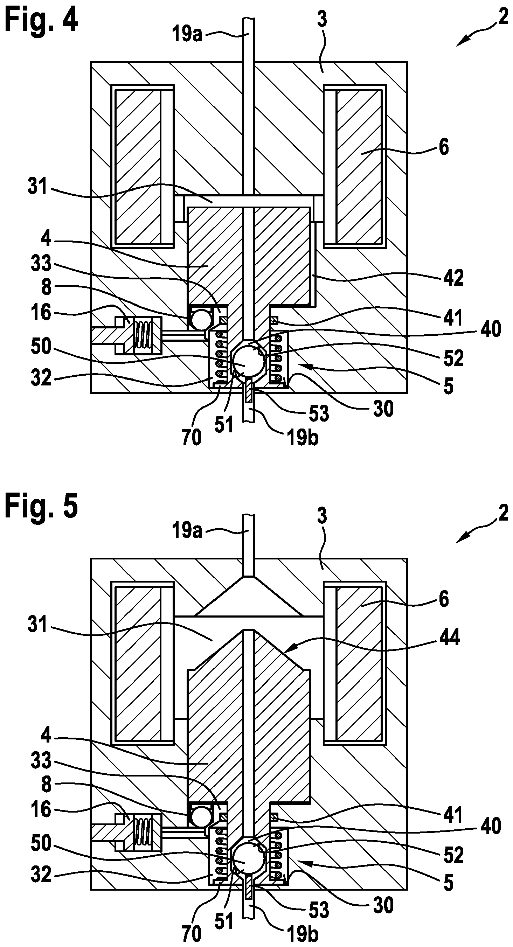

Figur 4 zeigt eine schematische Schnittansicht eines Druckmodulators 2 gemäß einem zweiten Ausführungsbeispiel der Erfindung. Gleiche bzw. funktional gleiche Teile sind mit den gleichen Bezugszeichen bezeichnet.

Wie aus Figur 4 ersichtlich ist, weist der Druckmodulator 2 einen Kolben 4 mit einem anderen geometrischen Aufbau auf. Der Kolben 4 weist wiederum eine Durchgangsöffnung 40 und eine teilweise im Kolben 4 angeordnete Ventilanordnung 5 wie im ersten Ausführungsbeispiel auf. Der Kolben 4 des zweiten Ausführungsbeispiels ist jedoch ein gestufter Kolben. Entsprechend der Stufe im Kolben ist auch der Zylinder 3 mit einer entsprechend angepassten Stufe ausgebildet. Weiterhin umfasst der Druckmodulator 2 des zweiten Ausführungsbeispiels ein Rückstellelement 7. Das Rückstellelement 7 ist zwischen dem Zylinder 3 und dem Kolben 4 angeordnet und stellt den Kolben 4 in die in Figur 4 gezeigte Ausgangsposition zurück. In dieser Ausgangsposition ist das Schließelement 50 der Ventilanordnung 5 geöffnet, da das Schließelement 50 durch die als Stift ausgebildete Betätigungseinrichtung 53 vom ersten Dichtsitz 51 abgehoben ist. Somit besteht eine Fluidverbindung zwischen der ersten und zweiten Hydraulikleitung 19a und 19b.

Das Rückstellelement 7 ist dabei in der zweiten Speicherkammer 32 angeordnet. In diesem Ausführungsbeispiel ist das Rückstellelement 7 eine Zylinderfeder. Ein Ende des Rückstellelements 7 stützt sich dabei an einem Ringabsatz 70 des Kolbens ab und das andere Ende stützt sich am Zylinder 3 an einem nach innen gerichteten Ringvorsprung 33 ab. Ferner ist zwischen der oberen Speicherkammer 31 und der unteren Speicherkammer 32 noch ein Rückschlagventil 33 angeordnet. Im Kolben 4 selbst ist noch ein Schlitz 42 an einer Kolbenmantelseite vorgesehen, um eine Bewegung des Kolbens einfach und sicher zu ermöglichen.

Wie im ersten Ausführungsbeispiel ist die zur ersten Speicherkammer 31 gerichtete Fläche des Kolbens 4 eben ausgebildet. Das Federelement 7 stellt somit beim zweiten Ausführungsbeispiel sicher, dass in einer Betriebssituation, in welcher kein Bremsvorgang durch den Fahrer eingeleitet wird, die Bremse immer offensteht und bremsbereit ist.

Die Figuren 5 bis 7 zeigen alternative Ausgestaltungen des Kolbens 4 eines erfindungsgemäßen Druckmodulators. In Figur 5 weist der Kolben einen sich von einer Kolbenmitte verjüngenden Bereich 44 auf. Somit befindet sich der Kolben in axialer Richtung derart im Zylinder 3, dass eine höhere Überdeckung mit einer Spule des Magnetaktors 6 gegeben ist (vgl. Figur 5).

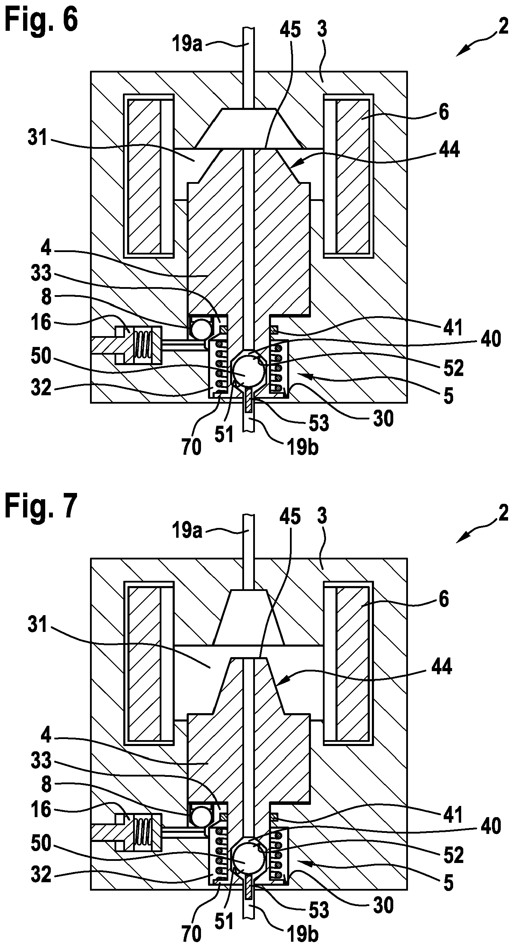

Figur 6 zeigt eine Geometrie des Kolbens 4, bei der neben dem sich verjüngenden Bereich 44 ein Endbereich 45 des Kolbens, der zur oberen Speicherkammer 31 gerichtet ist, flach ausgebildet ist.

Figur 7 zeigt einen Druckmodulator mit einem Kolben 4, welcher grundsätzlich eine ähnliche Form wie der in Figur 6 gezeigte Kolben aufweist, wobei allerdings eine Steigung des sich verjüngenden Bereichs größer ist als bei dem Kolben von Figur 6.

Die in den Figuren 5 bis 7 gezeigten Ausführungsbeispiele des Kolbens 4 machen deutlich, dass der Kolben 4 hierbei insbesondere hinsichtlich seiner geometrischen Form in Bezug auf den Magnetaktor optimiert werden kann. Eine Federkraft des Rückstellelements 7 kann dabei sehr klein gewählt werden, da lediglich eine Rückstellung des Kolbens 4 im Zylinder 3 im nicht gebremsten Zustand der Bremse des Fahrrads notwendig ist.

## Patentansprüche

1. Druckmodulator für ein Antiblockier-System eines Fahrrads, umfassend:
- einen Zylinder (3),
- einen Kolben (4) mit einer Durchgangsöffnung (40) für ein Hydraulikfluid, wobei der Kolben (4) im Zylinder (3) angeordnet ist und den Zylinder (3) in eine erste Speicherkammer (31) und eine zweite Speicherkammer (32) unterteilt, wobei die erste und zweite Speicherkammer (31, 32) über die Durchgangsöffnung (40) miteinander verbindbar sind,
**dadurch gekennzeichnet, dass** der Druckmodulator ferner umfasst:
- eine Ventilanordnung (5), welche ein Schließelement (50) und eine Betätigungseinrichtung (53) für das Schließelement umfasst, wobei das Schließelement (50) in der Durchgangsöffnung (40) angeordnet ist und die Betätigungseinrichtung (53) an einem Boden (30) des Zylinders (3) angeordnet ist, und
- einen Aktor (6) zum Bewegen des Kolbens (4).

2. Druckmodulator nach Anspruch 1, wobei die Durchgangsöffnung (40) einen ersten, zur zweiten Speicherkammer (32) gerichteten Dichtsitz (51) und einen zweiten, zur ersten Speicherkammer (31) gerichteten Dichtsitz (52) aufweist.

3. Druckmodulator nach einem der vorhergehenden Ansprüche, wobei das Schließelement (50) lose beweglich in der Durchgangsöffnung (40) angeordnet ist.

4. Druckmodulator nach einem der vorhergehenden Ansprüche, wobei das Schließelement eine Kugel ist.

5. Druckmodulator nach einem der vorhergehenden Ansprüche, wobei die Ventilanordnung (5) federlos ausgebildet ist.

6. Druckmodulator nach einem der Ansprüche 1 bis 4, wobei ein Rückstellelement (7) zwischen dem Kolben (4) und dem Zylinder (3) angeordnet ist, welches den Kolben in eine Ausgangslage zurückstellt, in welcher die Ventilanordnung (5) geöffnet ist.

7. Druckmodulator nach einem der vorhergehenden Ansprüche, wobei die Betätigungseinrichtung (35) ein Stift am Boden (30) des Zylinders ist.

8. Druckmodulator nach einem der vorhergehenden Ansprüche, wobei der Aktuator (6) ein Magnetaktuator ist oder wobei der Aktuator ein mit dem Kolben verbundener elektrischer Motor ist.

9. Druckmodulator nach einem der vorhergehenden Ansprüche, ferner umfassend eine Druckbegrenzungseinrichtung (16), welche einen maximal durch einen Fahrer aufbringbaren Bremsdruck begrenzt.

10. Druckmodulator nach einem der vorhergehenden Ansprüche, wobei der Kolben (4) an einer zur ersten Speicherkammer (31) gerichteten Seite kegelförmig oder flach ausgebildet ist.

11. Antiblockiersystem eines Fahrrads, insbesondere eines elektrisch und/oder mit Muskelkraft betreibbaren Fahrrads, umfassend einen Druckmodulator nach einem der vorhergehenden Ansprüche.

12. Zweirad, insbesondere Fahrrad oder elektrisch betreibbares Fahrrad, umfassend ein Antiblockiersystem nach Anspruch 11.

13. Zweirad nach Anspruch 12, wobei ein Vorderrad und/oder ein Hinterrad mit einem Antiblockiersystem ausgestattet ist.

## Claims

1. Pressure modulator for an anti-lock braking system of a bicycle, comprising:
- a cylinder (3),
- a piston (4) having a passage opening (40) for a hydraulic fluid, wherein the piston (4) is arranged in the cylinder (3) and subdivides the cylinder (3) into a first storage chamber (31) and a second storage chamber (32), wherein the first and second storage chambers (31, 32) can be connected to each other via the passage opening (40),
**characterized in that** the pressure modulator further comprises:
- a valve arrangement (5), which comprises a closing element (50) and an actuating device (53) for the closing element, wherein the closing element (50) is arranged in the passage opening (40) and the actuating device (53) is arranged on a bottom (30) of the cylinder (3), and
- an actuator (6) for moving the piston (4).

2. Pressure modulator according to Claim 1, wherein the passage opening (40) has a first sealing seat (51) directed towards the second storage chamber (32) and a second sealing seat (52) directed towards the first storage chamber (31).

3. Pressure modulator according to one of the preceding claims, wherein the closing element (50) is loosely movably arranged in the passage opening (40).

4. Pressure modulator according to one of the preceding claims, wherein the closing element is a ball.

5. Pressure modulator according to one of the preceding claims, wherein the valve arrangement (5) is spring-free.

6. Pressure modulator according to one of Claims 1 to 4, wherein a restoring element (7) is arranged between the piston (4) and the cylinder (3) and resets the piston into an initial position in which the valve arrangement (5) is open.

7. Pressure modulator according to one of the preceding claims, wherein the actuating device (35) is a pin at the bottom (30) of the cylinder.

8. Pressure modulator according to one of the preceding claims, wherein the actuator (6) is a solenoid actuator or wherein the actuator is an electric motor connected to the piston.

9. Pressure modulator according to one of the preceding claims, further comprising a pressure limiting device (16), which limits a maximum braking pressure that can be applied by a rider.

10. Pressure modulator according to one of the preceding claims, wherein the piston (4) is designed to be conical or flat on a side directed towards the first storage chamber (31).

11. Anti-lock braking system of a bicycle, in particular a bicycle that can be operated electrically and/or with muscle force, comprising a pressure modulator according to one of the preceding claims.

12. Two-wheeled vehicle, in particular a bicycle or a bicycle that can be operated electrically, comprising an anti-lock braking system according to Claim 11.

13. Two-wheeled vehicle according to Claim 12, wherein a front wheel and/or a rear wheel is equipped with an anti-lock braking system.

## Revendications

1. Modulateur de pression pour un système antiblocage d'une bicyclette, comprenant :
- un cylindre (3),
- un piston (4) avec une ouverture de passage (40) pour un fluide hydraulique, le piston (4) étant agencé dans le cylindre (3) et divisant le cylindre (3) en une première chambre d'accumulation (31) et une deuxième chambre d'accumulation (32), la première et la deuxième chambre d'accumulation (31, 32) pouvant être reliées l'une à l'autre via l'ouverture de passage (40), **caractérisé en ce que** le modulateur de pression comprend en outre :
- un agencement de soupape (5), qui comprend un élément de fermeture (50) et un appareil d'actionnement (53) pour l'élément de fermeture, l'élément de fermeture (50) étant agencé dans l'ouverture de passage (40) et l'appareil d'actionnement (53) étant agencé sur un fond (30) du cylindre (3), et
- un actionneur (6) pour déplacer le piston (4).

2. Modulateur de pression selon la revendication 1, dans lequel l'ouverture de passage (40) présente un premier siège d'étanchéité (51) orienté vers la deuxième chambre d'accumulation (32) et un deuxième siège d'étanchéité (52) orienté vers la première chambre d'accumulation (31).

3. Modulateur de pression selon l'une quelconque des revendications précédentes, dans lequel l'élément de fermeture (50) est agencé de manière librement mobile dans l'ouverture de passage (40).

4. Modulateur de pression selon l'une quelconque des revendications précédentes, dans lequel l'élément de fermeture est une bille.

5. Modulateur de pression selon l'une quelconque des revendications précédentes, dans lequel l'agencement de soupape (5) est configuré sans ressort.

6. Modulateur de pression selon l'une quelconque des revendications 1 à 4, dans lequel un élément de rappel (7) est agencé entre le piston (4) et le cylindre (3), qui ramène le piston dans une position initiale dans laquelle l'agencement de soupape (5) est ouvert.

7. Modulateur de pression selon l'une quelconque des revendications précédentes, dans lequel l'appareil d'actionnement (35) est une tige au fond (30) du cylindre.

8. Modulateur de pression selon l'une quelconque des revendications précédentes, dans lequel l'actionneur (6) est un actionneur magnétique ou dans lequel l'actionneur est un moteur électrique relié au piston.

9. Modulateur de pression selon l'une quelconque des revendications précédentes, comprenant en outre un appareil de limitation de pression (16) qui limite une pression de freinage maximale pouvant être appliquée par un conducteur.

10. Modulateur de pression selon l'une quelconque des revendications précédentes, dans lequel le piston (4) est configuré sous forme conique ou plate sur un côté orienté vers la première chambre d'accumulation (31).

11. Système antiblocage d'une bicyclette, notamment d'une bicyclette à propulsion électrique et/ou musculaire, comprenant un modulateur de pression selon l'une quelconque des revendications précédentes.

12. Deux-roues, notamment bicyclette ou bicyclette à propulsion électrique, comprenant un système antiblocage selon la revendication 11.

13. Deux-roues selon la revendication 12, dans lequel une roue avant et/ou une roue arrière est équipée d'un système antiblocage.
